# EUROPEAN PATENT SPECIFICATION

(11) **EP 1 887 578 B1**
(45) Date of publication and mention of the grant of the patent: **18.12.2013**
(21) Application number: 07120363.2
(22) Date of filing: 30.12.2004
(51) Int. Cl.: G11B 27/32, G11B 20/00, G11B 20/12, G11B 7/007, G11B 20/18

(54) **Recording medium with physical access control (PAC) information thereon and apparatus and methods for forming, recording, and reproducing the recording medium**
Aufzeichnungsmedium mit Informationen über die Zugangssteuerung sowie Vorrichtung und Verfahren zur Erzeugung, Aufzeichnung und Wiedergabe des Aufzeichnungsmediums
Support d'enregistrement à l'aide d'informations de contrôle d'accès physique (CAP) sur celui-ci et appareil et procédés de formation, enregistrement et reproduction du support d'enregistrement

(30) Priority: 19.03.2004 US 554356 P; 31.05.2004 KR 20040039142
(43) Date of publication of application: 13.02.2008
(62) Divisional of application: 04808643.3
(73) Proprietor: LG Electronics Inc., Youngdungpo-gu Seoul 150-721 (KR)
(72) Inventor: Park, Yong Cheol, Gwacheon-si, Gyeonggi-do (KR)
(74) Representative: Vossius & Partner

(56) References cited:
- EP-A- 1 505 597
- EP-A- 1 587 102
- EP-A2- 1 600 975
- WO-A-03/030173
- WO-A-03/102936
- WO-A-2005/086598
- US-A1- 2003 210 627
- BLU-RAY DISC ASSOCIATION: "Rewritable Blu-Ray Disc (BD-RE) Multi-media Command Set Description, Version 0.80"[Online] 9 November 2004 (2004-11-09), XP002479115 Retrieved from the Internet: URL:http://www.t10.org/ftp/t10/document.04 /04-328r1.pdf> [retrieved on 2008-05-05]

## Description

### Technical Field

The present invention relates to PAC (Physical Access Control), PAC zones, PAC clusters, media containing PAC zones and/or clusters (for example, high density optical discs, such as Blu-ray Disc) and apparatus and methods for recording and/or reproducing data to and/or from the media.

### Background Art

Media, for example, optical discs may be used for recording a large quantity of data. Of the optical discs available, a new high density optical media (HD-DVD), for example, the Blu-ray Disc (hereafter called as "BD") is under development, which enables increased recording and/or storing of high definition video and/or audio data.

BD further includes a rewritable Blu-ray disc (BD-RE), Blu-ray disc writable once (BD-WO), and Blu-ray disc read only (BD-ROM).

Currently, one problem with existing systems is the potential incompatibility between drives of different versions, for example a drive of a previous version with a previous set of capabilities may have difficulty interacting with a medium that has interacted with a drive including at least one capability from a subsequent set of capabilities.

WO 2005/086598 discloses a recording medium which includes at least one PAC cluster. The PAC cluster includes information for managing an access to the recording medium. Each PAC cluster includes a PAC header common to the PAC clusters and a PAC specific information area, which includes information specific to each PAC cluster. The PAC header includes segment information identifying at least one segment area in a user data area of the recording medium by position information of the each segment area.

WO 03/030173 discloses a DVD video data structure for a DVD disk of recordable type, which includes management data areas.

US 2003/0210627 A discloses a disk-like recording medium in which a program area is provided between a lead-in area and a lead-out area. The program area includes a user data area and a general purpose area, and a DMA is provided in the general purpose area.

EP 1 505 597 A discloses a recording medium which includes a DMA containing PAC information, and a TDDS containing status information relating to the PAC information.

WO 2005/086598 and EP 1 505 597 A are documents under Art. 54(3) EPC.

### Disclosure of Invention

The present invention provides a PAC on a medium, such as a high density optical disc, and apparatus and methods for recording data to and reproducing data from the medium using a PAC.

The present invention also provides physical access control (PAC) information recorded thereon, in order to improve data protection, improve data management, improve reproduction compatibility, avoid destruction of data, and/or reduce unnecessary, repetitive operations.

The present invention further provides a medium, such as a high density optical disc, and apparatus and methods for managing a PAC.

The present invention further provides a medium, such as a high density optical disc, and apparatus and methods which use a PAC for managing data.

More specifically, the present invention is defined by the claims.

It is to be understood that both the foregoing general description and the following detailed description of embodiments of the present invention are examples and explanatory and are intended to provide further explanation of the invention as claimed.

### Brief Description of Drawings

The accompanying drawings, which are included to provide a further understanding of example embodiments of the invention and are incorporated in and constitute a part of this application, illustrate example embodiment(s) of the invention where,
FIG. 1 illustrates PAC zones on a high density optical disc in accordance with an example embodiment of the present invention;
FIG. 2 illustrates a diagram showing configurations of INFO2 zone and INFO1 zone on a high density optical disc in accordance with an example embodiment of the present invention;
FIG. 3 illustrates a structure of a PAC recorded on a high density optical disc in accordance with an example embodiment of the present invention;
FIG. 4 illustrates a structure of a PAC on a high density optical disc in accordance with an example embodiment of the present invention;
FIG. 5 illustrates a configuration of an "Unknown PAC Rules" field in accordance with an example embodiment of the present invention;
FIG. 6 illustrates segment zones on a high density optical disc in accordance with an example embodiment of the present invention;
FIG. 7 illustrates a PAC zone on a high density optical disc in accordance with an example embodiment of the present invention;
FIG. 8 illustrates segment zones managed by a plurality of PAC zones on a high density optical disc in accordance with an example embodiment of the present invention;
FIG. 9 illustrates a Disc Definition Structure (DDS) on a high density optical disc in accordance with an example embodiment of the present invention;
FIG. 10 illustrates a DDS representing a PAC status on a high density optical disc in accordance with an example embodiment of the present invention;
FIGs. 11 to 13 illustrate diagrams showing several alternatives of a DDS, each representing a PAC status on a high density optical disc in accordance with an example embodiment of the present invention;
FIG. 14 illustrates additional alternatives of a DDS on a high density optical disc in accordance with example embodiments of the present invention;
FIG. 15 illustrates other alternatives of a DDS representing a PAC status on a high density optical disc in accordance with example embodiments of the present invention;
FIG. 16 illustrates a DDS representing a PAC status on a high density optical disc in accordance with another example embodiment of the present invention;
FIG. 17 illustrates a block diagram of an optical recording/reproducing apparatus in accordance with an example embodiment of the present invention; and
FIG. 18 illustrates a flow chart showing a method for recording to and/or reproducing from a high density optical disc having PAC recorded thereon in accordance with an example embodiment of the present invention.

### Best Mode for Carryins Out the Invention

Reference will now be made in detail to embodiments of the present invention, examples of which are illustrated in the accompanying drawings. Wherever possible, the same reference numbers will be used throughout the drawings to refer to the same or like parts.

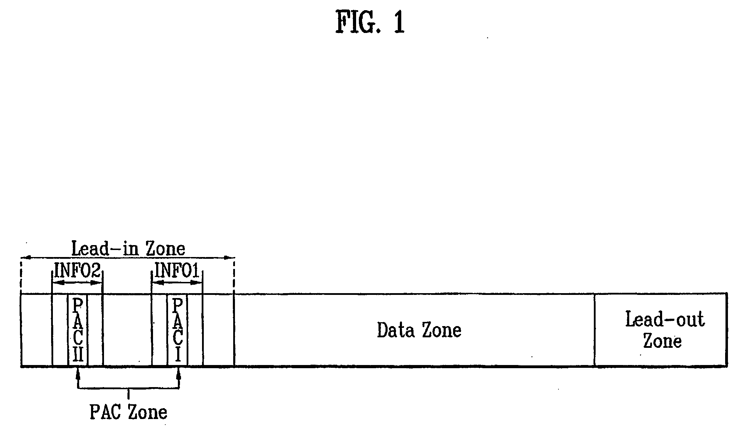

FIG. 1 illustrates a PAC zones on a high density optical disc in accordance with an example embodiment of the present invention.

Referring to FIG 1, the high density optical disc may be partitioned, from an inner circumference to an outer circumference, into a lead-in zone, a data zone, and a lead-out zone. The lead-in zone may further be partitioned into an INFO2 zone and an INFO1 zone for recording various kinds of information thereon. The INFO2 zone and/or the INFO1 zone may include PAC (Physical Access Control) zones.

For convenience, a PAC zone assigned to the INFO2 zone is labeled as a PACII zone and the PAC zone assigned to the INFO1 zone is labeled a PACI zone. One of the PACII zone and the PACI zone may have an original PAC recorded thereon and the other may be a back up zone for recording a copy of the original PAC. If a writing direction is from the inner circumference to the outer circumference of the disc, it may be advantageous that the original PAC is recorded on the PACII zone and the backup PAC is recorded on the PACI zone.

The PAC zone may be provided to handle problems that may occur when an older version of a drive apparatus cannot detect functions on a disc added having functions compatible with a newer version of a drive apparatus. The PAC zone may handle compatibility problems using one or more an "unknown rules".

An "unknown rule" may be used to control predictable operations of the disc, for example, basic control of read, write, etc., linear replacement of a defective zone, logical overwrite, etc. An area may also be provided on the disc, indicating where the "unknown rule" is applicable, for example, segments for defining the entire disc or a certain portion of the disc, which is described later in more detail.

Thus, by defining an area of the disc, an older version drive apparatus is able to access by using the "unknown rule", a newer version of the disc reduces unnecessary access operation of the older version drive apparatus.

Moreover, by defining an accessible area on a physical area of the disc for an older version drive apparatus to access by using the PAC, a data area containing user data recorded thereon can be protected more robustly and/or unauthorized access (for example, hacking) of the disc may be prevented or reduced.

The INFO2 zone and the INFO1 zone having the PACII and I zones therein in the lead-in zone may be reviewed in view of writable characteristics of the high density optical disc.

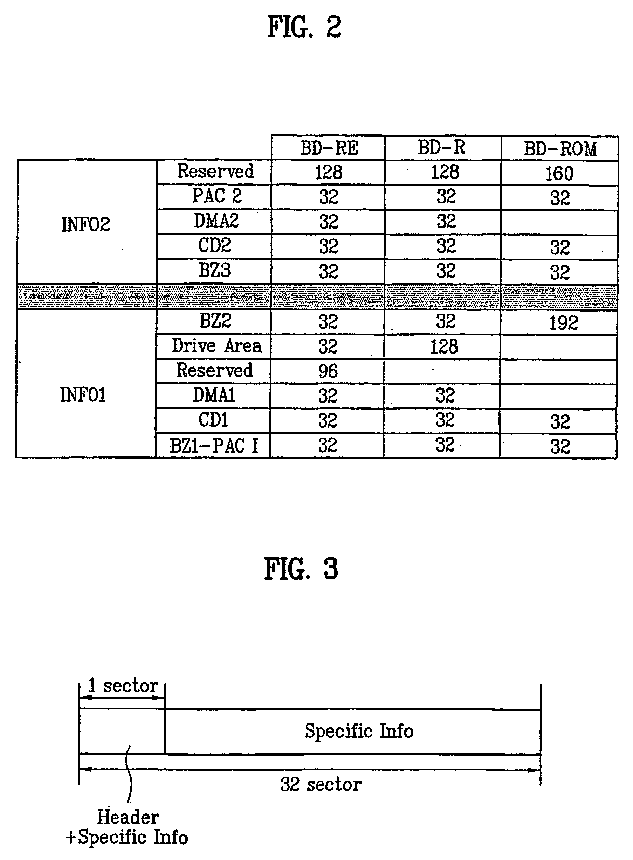

FIG 2 illustrates a diagram showing configurations of the INFO2 zone and the INFO1 zone on a high density optical disc in accordance with an example embodiment of the present invention.

Referring to FIG 2, for an example BD-RE high density optical disc, the INFO2 zone may have 256 clusters including 32 clusters of PACII zone, 32 clusters of DMA (Defect Management Area) 2 zone for management of defects, 32 clusters of CD (Control Data) 2 zone having control information recorded thereon, and/or 32 clusters of BZ (Buffer Zone) 3 zone of a buffer zone.

The INFO1 zone may include 32 clusters of BZ2 zone of a buffer area, 32 clusters of drive area which may be a drive area for storing information specific to a drive, 32 clusters of DMA1 zone for managing defects, 32 clusters of CD1 zone for recording control information, and/or a BZ1-PACI zone utilizable as the PAC zone.

For a write once high density optical disc (BD-R), the INFO2 zone may have 256 clusters including a PACII zone, a DMA 2 zone, a CD 2 zone, and a BZ 3 zone, each with 32 clusters, and the INFO1 zone includes a BZ2 zone, a DMA1 zone, a CD1 zone, and/or a BZ1-PACI zone, each with 32 clusters, and 128 clusters of drive area.

For a read only high density optical disc (BD-ROM), a PAC may be a primary PAC and the INFO2 zone may have 256 clusters including a PACII zone, a CD 2 zone, and a BZ 3 zone, each with 32 clusters, and the INFO1 zone 256 clusters including a CD1 zone, and/or a BZ1-PACI zone, each with 32 clusters.

The PAC zones of example embodiments of the present invention may be assigned to the INFO2 zone and/or the INFO1 zone in the lead-in zone in 32 clusters each, according to rewritable characteristics of the high density optical disc.

In the PAC zone of 32 clusters, one PAC may have one cluster, for recording a plurality of valid PACs. An example structure in which one PAC is recorded as one cluster is described with reference to FIG. 3.

FIG 3 illustrates a PAC recorded on a high density optical disc in accordance with an example embodiment of the present invention.

Referring to FIG. 3, one PAC of one cluster size (32 sectors) may include a header zone and a specific information zone, specific to a particular disc drive (for example, optical disc drive).

The PAC header zone may have 384 bytes allocated to a first sector of the PAC, for recording various kinds of PAC information, such as information on an "unknown PAC rule" and segments, and another area of the PAC zone may have information specific to the (optical) disc drive may be referred to as "known rules" recorded thereon.

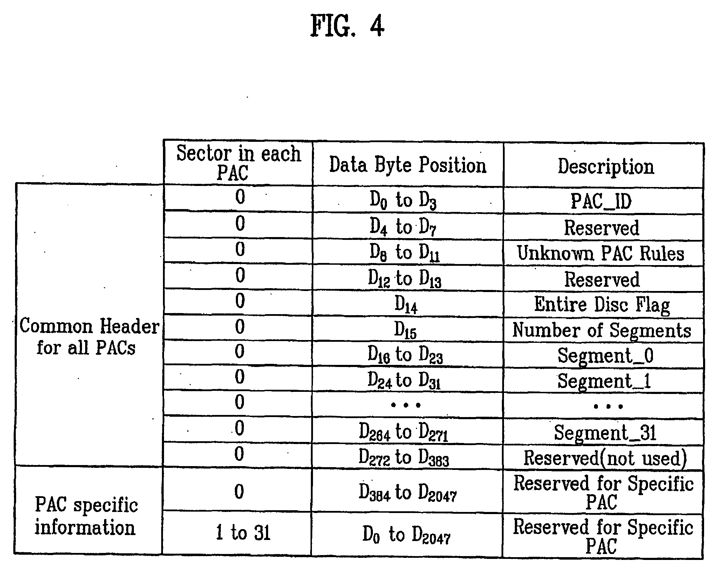

An example structure of a PAC recorded in above structure is described with reference to FIG. 4. For convenience, in the description, particular fields of the PAC that require more detailed description will refer to drawings that illustrate the particular fields.

FIG. 4 illustrates a PAC on a high density optical disc in accordance with an example embodiment of the present invention.

Referring to FIG. 4, the PAC may include a header portion applicable to all PACs and an area having information specific to the drive, recorded thereon.

An example header portion may include 4 bytes of "PAC_ID", 4 bytes of "Unknown PAC Rules", 1 byte of "Entire Disc Flag", 1 byte of "Number of Segments", and/or 32 segments Segment_0 ~ Segment_31 each with 8 bytes.

The "PAC_ID" may provide the present PAC status and identification codes, for example, if the "PAC_ID" contains '00 00 00 00' bits, the "PAC_ID" indicates that the present PAC is not used, if the "PAC_ID" contains 'FF FF FF FE' bits, the "PAC_ID" indicates that the present PAC zone is not available for use due to defects or something similar, and if the "PAC_ID" contains 'FF FF FF FF' bits, the "PAC_ID" indicates that the present PAC zone is available for use again even if the PAC zone has been used previously.

By recording the "PAC_ID" in predetermined bits, such as '54 53 54 00' bits, the "PAC_ID" may be used as a code for determining if the disc is a disc for which a present drive can have free access to. That is, if the present drive does not recognize the "PAC_ID" applied thereto (possibly a case where the present drive can not recognize the present PAC due to version mismatch or similar problem), the '54 53 54 00' bits may be used as code to refer to information recorded in the "Unknown PAC Rules" field.

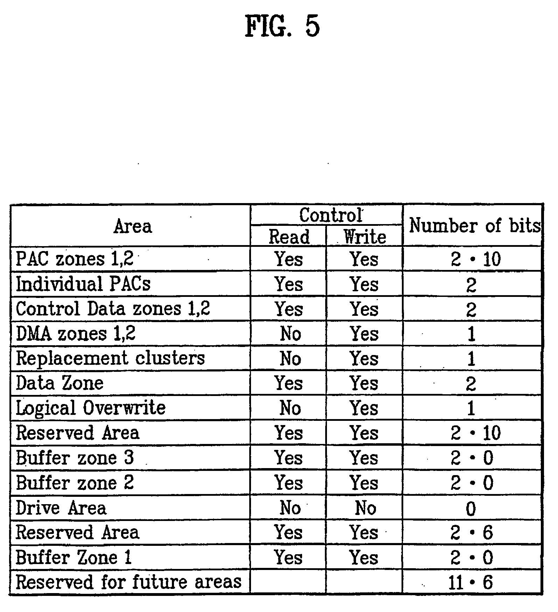

As described, the "Unknown PAC Rules" field may be used as a field that designates an operation range of a drive that can not recognize the present PAC, which will be described further with reference to FIG 5.

FIG 5 illustrates an "Unknown PAC Rules" field in accordance with an example embodiment of the present invention.

Referring to FIG. 5, a degree of controllability of various areas on the disc may be enabled by the "Unknown PAC Rules". In this example, the "Area" column in Fig. 5 represents the controllable areas on the disc, the "Control" column represents control types, such as read/write etc., and "Number of bits" column represents a number of bits required for control. The additional bits in the "Number of bits" column may represent cases of dual layer disc with two recording/reproduction sides.

For example, in the "Area" column in Fig. 5, read/write controllability of the PAC zone can be represented with "PAC zones 1, 2" fields, and write controllability of a defect management zone can be represented with "DMA Zone 1, 2" fields. Write controllability of a replacement area for a defective area can be represented with "Replacement Clusters" field, read/write controllability of a data zone can be represent with a "Data Zone" field, and logical overwrite controllability can be represented with a "Logical Overwrite" field.

Write controllability is applicable only to re-writable discs BD-RE and BD-R and the write controllability of a replacement area for a defective area is also applicable to the re-writable discs BD-RE and BD-R. As a result, various example features of the present invention may depend on the re-writable characteristics of the high density (optical) disc.

Using the above technique, the "Unknown PAC Rules" field enables designation of a controllable area on the disc for a drive with a version mismatch. Moreover, the above technique may also be applicable to control access to a particular physical area on a disc at a user's option.

Returning to Fig. 4, the "Entire Disc Flag" field may be used as a field for indicating that the PAC is applicable to an entire area of the disc and the "Number of Segments" field is a field that may represent a number of segment areas to which the PAC is applicable.

In an example embodiment, a maximum number of segments may be allocatable to one PAC. In an example embodiment, a maximum number of 32 segments can be allocated to one PAC and information on the allocated segments may be written in "Segment_0" to "Segment_31" fields, each including 8 bytes. Each of the "Segment_0~31" fields may include the first physical sector number (PSN) and the last PSN of the allocated segment area recorded thereon.

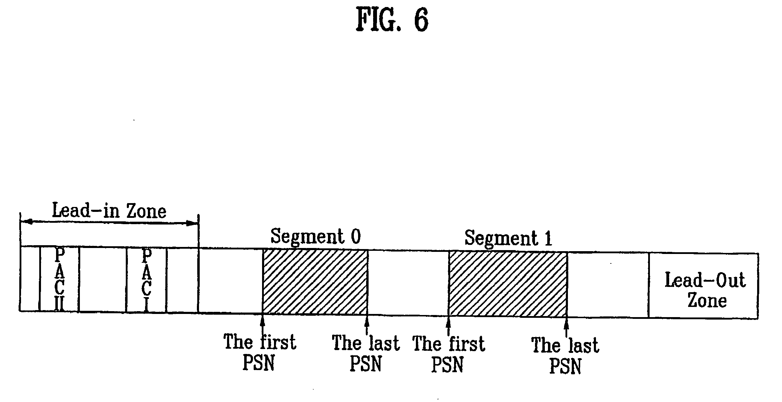

Segments are described in more detail below. FIG 6 illustrates segment zones on a high density optical disc in accordance with an example embodiment of the present invention.

Referring to FIG 6, if required, there may be a maximum number (for example, 32) of segment areas on the high density optical disc, for applying the PAC thereto. The maximum number of segment area may start from "segment 0".

In an example, positions of the segment areas may be identified by an optical disc drive by writing the first PSN, which may indicate a starting position of the allocated segment area and the last PSN which may indicate the last position of the allocated segment area on "Segment" fields of PACII and PACI zones.

In an example arrangement, none of the plurality of allocated segments need overlap and the starting and ending positions may be designated at boundaries of clusters.

Thus, in example embodiments, the present invention may provide a plurality of PACs, to manage a number (for example, 32) segment areas, which are described in more detail below.

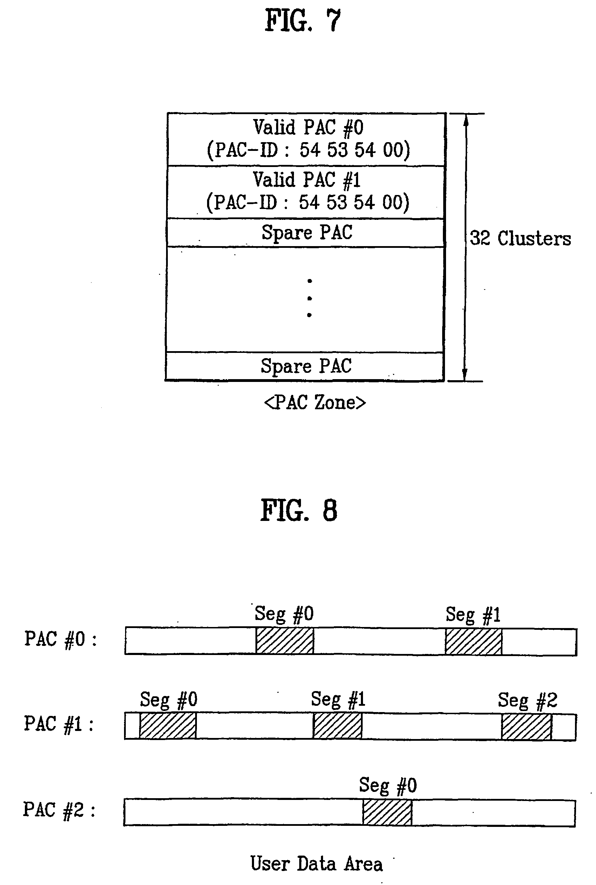

FIG 7 illustrates a PAC zone on a high density optical disc in accordance with an example embodiment of the present invention.

Referring to FIG. 7, a plurality of valid PACs, each with a common cluster size, may be written in one PAC zone (for example, the PAC zone of INFO2 or INFO1) of 32 clusters.

A valid PAC may represent a zone having various kinds of PAC information described above, and including copies, may include a maximum (for example, 16) valid PACs, each with a common size, which can be allocated to one PAC zone.

A valid PAC may have a predetermined PAC_ID (for an example, PAC_ID = 54 53 54 00) according to a drive version of the optical disc having the PAC recorded thereon, and a PAC zone not used may be a spare PAC zone. The spare PAC zone may be filled with 00 bits (PAC_ID = 00 00 00 00) indicating that the zone is not used or may be left as a "not used area", depending on a setting of the optical disc drive.

Because only one write is physically possible in the case of a write-once high density optical disc BD-R, in an example, nothing is written in the spare area until writing is completed or until the disc is closed (no additional writing is desired by the user).

Because physical repetitive overwrite is possible in the case of a re-writable high density optical disc BD-RE, in an example, even if the valid PACs and Copy PACs thereof are written in the PAC zone of 32 clusters, a number of writing times in acceptable.

If a defect is present in one PAC zone in the PAC to be written therein, the PAC may be written in an area next to the defective area. A defect may be a result of damage to, or contamination of a disc surface, and when the defect occurs in the area the PAC is to be written, the PAC information may be written in an area next to the defective area.

The plurality of valid PACs which can be allocated to the PAC zone may have various kinds of information regarding controllable areas of the disc, which are described with reference to FIG. 8.

FIG 8 illustrates segment zones managed by a plurality of PAC zones on a high density optical disc in accordance with an example embodiment of the present invention.

Referring to FIG 8, for drives of different versions, controllable segment areas may be designated on the disc by using the plurality of PACs. That is, it is possible to control a segment 0 Seg #0, and segment 1 Seg #1 via PAC #0 on the disc, a segment 0 Seg #0, segment 1 Seg #1, and segment 2 Seg #2 on the disc via PAC #1, and segment 0 Seg #0 on the disc via PAC #2.

In this example, none of the segments areas controllable by respective PACs overlap and the segments areas are reordered in an ascending order starting from segment #0, which indicates that the PACs may be independent from each other.

Moreover, even though one PAC may have a maximum of 32 segment areas, a total number of the segments managed by the plurality of PACs may also not exceed 32, even in an example where the segments are managed by a plurality of PACs.

Finding a position of the valid PAC zone from the PAC zone or quick finding of a position of a next writable PAC zone, while avoiding an area written already to or a defective area from above PAC zone, may affect initialization and/or recording speed of the disc. In particular, many retries may be executed to attempt to read a defective area.

In example embodiments, the present invention provides a method in which various status information on positions of the plurality of valid PACs, a position of the next writable PAC, and/or other relevant information is written, for example, in a data structure, such as a Disc Definition Structure (DDS).

A DDS may be a zone containing information on a first PSN of a defect list, a position of a user data zone, sizes of spare areas, and/or other relevant information, and may be information written in the DMA zone of the disc as information in a Defect Management Structure (DMS) together with a Defect List (DFL).

The information written in the DMA may be information scanned and pre-loaded in advance when the disc is loaded into a drive. Therefore, once various status information on the PAC, such as positions of the plurality of valid PACs, a position of the next writable PAC, and/or other relevant information is written in the DDS as pointers, the optical disc drive may obtain information on the PAC zone without needing to scan all the PAC zones.

A DDS may include various kinds of information on status of the PAC zone and will be described below.

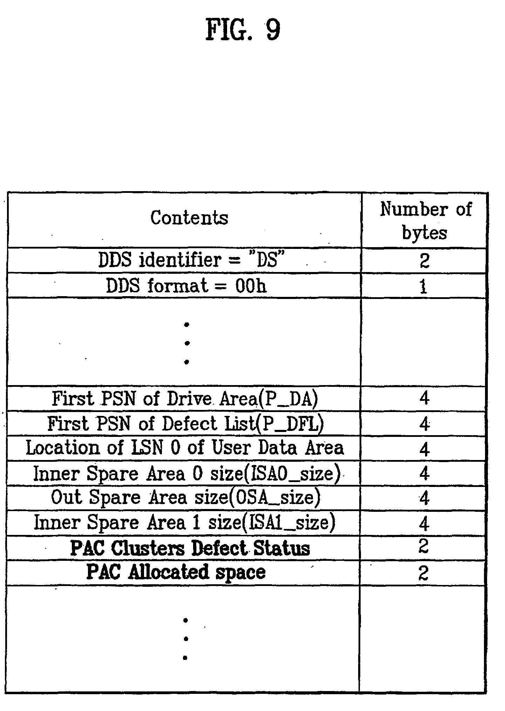

FIG 9 illustrates a DDS on a high density optical disc in accordance with an example embodiment of the present invention.

Referring to FIG. 9, the DDS may include a "DDS identifier" field, a "DDS format" field, a "First PSN of Drive Area (P_DA)" field representing the first physical sector number of a drive area, a "First PSN of Defect List (P_DFL)" field representing the first PSN of the defect list, a "Location of LSN 0 of User Data Area" field representing a position of an LSN (logical sector number) of the user data area, an "Inner Spare Area 0 size (ISA0_size)" field representing a size of an inner spare area 0, an "Outer Spare Area size (OSA_size)" field representing a size of an outer spare area 0, an "Inner Spare Area 1 size (ISA1_size)" field representing a size of an inner spare area 1, a "PAC Clusters Defect Status" field representing a defect status of the PAC zone, and/or a "PAC Allocated Space" field representing a designated status of the PAC zone.

Thus, an example DDS may provide various kinds of status information on the PAC, such as a position of defective cluster in the PAC zone and/or a position of clusters having valid PAC allocated thereto by using the "PAC Clusters Defect Status" field and/or the "PAC Allocated Space" field.

A method of representing PAC status information using the "PAC Clusters Defect Status" field and/or the "PAC Allocated Space" field will be described in more detail below.

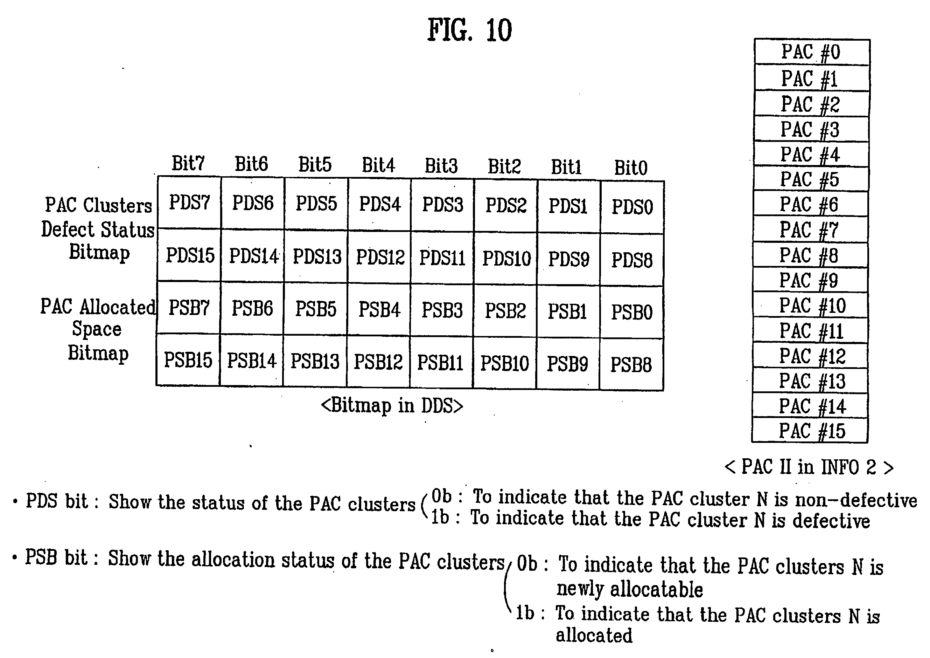

FIG 10 illustrates a diagram showing a DDS representing a PAC status on a high density optical disc in accordance with an example embodiment of the present invention.

Referring to FIG. 10, two bytes may be allocated to the "PAC Clusters Defect Status" field of the DDS, for representing a writing failure due to a cluster defect of the PAC zone of a defective cluster area.

As shown, a PDS N (PAC Defect Status) bit in FIG. 10 is a bit for indicating the status of the PAC clusters, wherein a 0 bit may indicate the PAC cluster N is not a defective area and a 1 bit may indicate the PAC cluster N is a defective area.

The PDS 0 bit may indicate a status of the PAC #0 zone, the PDS 1 bit may indicate a status of the PAC #1 zone, and so on, up to PDS 15 bit (for example, for 16) for indicating status of valid PACs, which can be allocated to one PAC zone.

Two bytes may also allocated to the "PAC Allocated Space" field of the DDS zone, for indicating an allocation status of the PAC zone.

The PSB N (RAC Status Bit) in FIG. 10 may be a bit indicating the allocation status of the PAC clusters, wherein a 0 bit may indicate a status in which the PAC cluster N can be newly allocated, for example, the PAC is not used or PAC_ID = 00000000 or FFFFFFFF state and a 1 bit may indicate a status in which the PAC cluster N is allocated.

In this example, like the PDS bits, the PSB bits may be allocated from a PSB 0 bit to a PSB 15 bit, such that the PSB 0 bit indicates PAC #0 zone, PSB 1 bit indicates PAC #1 zone, etc.

Various example embodiments in which a status of the PAC zone is represented using a DDS, for example, as described, will be discussed below.

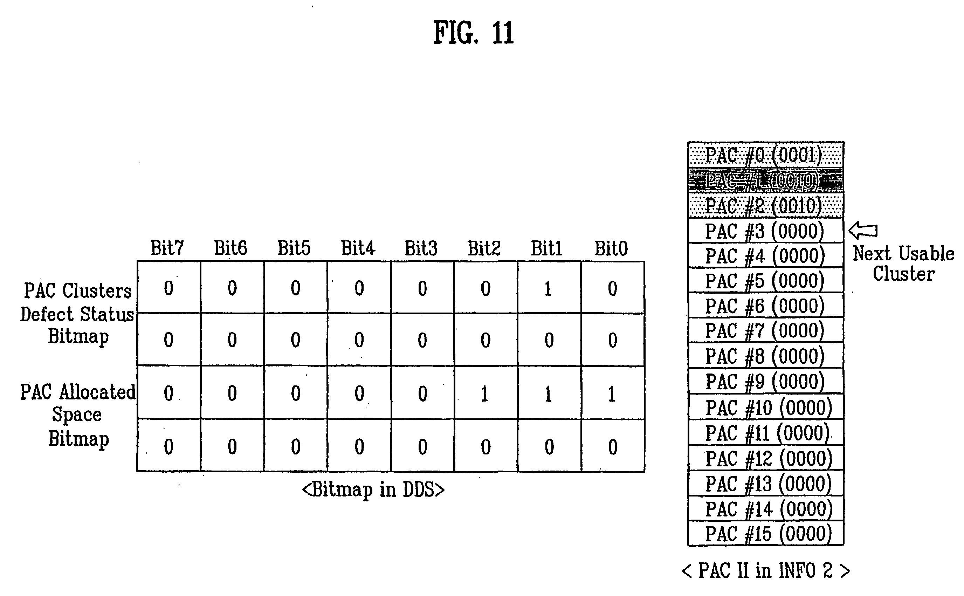

FIGs. 11 to 13 illustrate diagrams showing various example embodiments of a DDS, each representing a PAC status on a high density optical disc in accordance with an example embodiment of the present invention.

Referring to FIG 11, the PDS 1 bit is I on a bitmap of the "PAC Clusters Defect Status" field, which is information on a defective area of the PAC zone in the information contained in the DDS. Accordingly, an optical disc drive may be made aware that the PAC #1 zone is defective based on the information.

Also, each of PSB 0, PSB 1, and PSB 2 bits is also 1 on a bitmap of the "PAC Allocated Space" field indicating an allocation status of the PAC zone, and an optical disc drive may be made aware that the PAC #0, PAC #1, and PAC #2 zones are in allocated states based on the above information. Therefore, the next available PAC zone that is not defective area and not an allocated area, is PAC #3 zone.

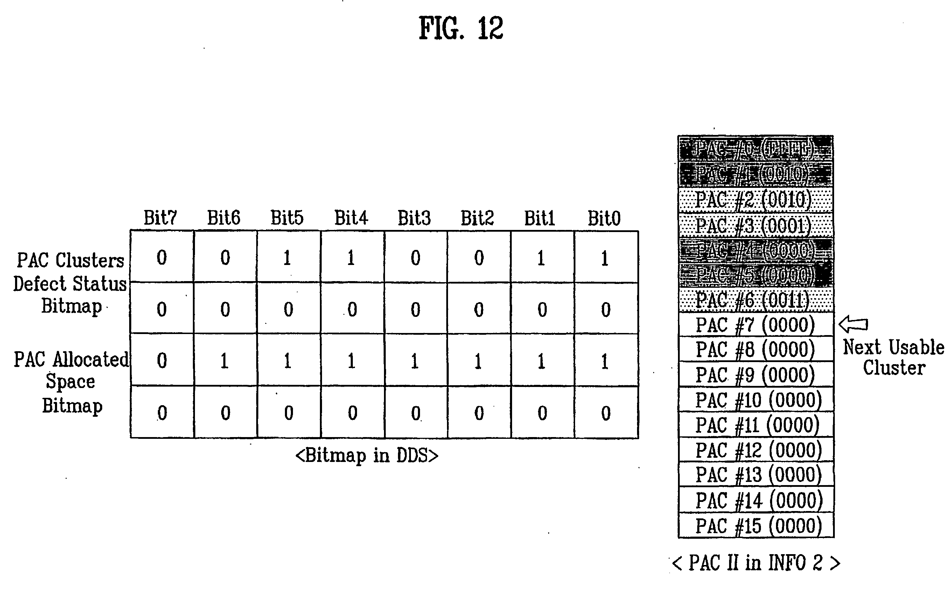

Also, referring to FIG 12, because each of the PDS 0, PDS 1, PDS 4, and PDS 5 bits is 1 on the bitmap of the "PAC Clusters Defect Status" field, an optical disc drive may be made aware that each of the PAC #0, PAC #1, PAC #4, and PAC #5 zones is a defective area, and because each the PSB 0, PSB 1, PSB 2, PSB 3, PSB 4, PSB 5, and PSB 6 bits is 1 on the bitmap of the "PAC Allocated Space" field, an optical disc drive may be made aware that each of the PAC #0, PAC #1, PAC #2, PAC #3, PAC #4, PAC #5, and PAC #6 zones is in an allocated status. Therefore, in the case of FIG. 12, the next available PAC zone is PAC #7.

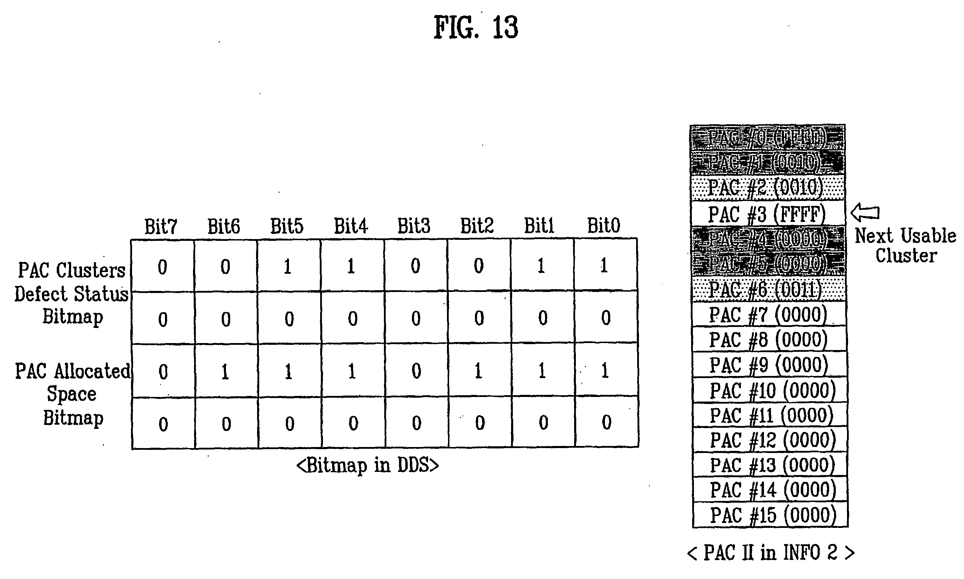

Also, referring to FIG 13, because each of the PDS 0, PDS 1, PDS 4, and PDS 5 bits is 1 on the bitmap of the "PAC Clusters Defect Status" field, an optical disc drive may be made aware that each of the PAC #0, PAC #1, PAC #4, and PAC #5 zones is a defective area, and because each of the PSB 0, PSB 1, PSB 2, PSB 4, PSB 5, and PSB 6 bits is 1 on the bitmap of the "PAC Allocated Space" field, an optical disc drive may be made aware that each of the PAC #0, PAC #1, PAC #2, PAC #4, PAC #5, and PAC #6 zones is in an allocated status.

Therefore, in the case of FIG 13, the next available PAC zone is PAC #3, which may be an area which is presently re-usable, even if the PAC #3 area was used previously.

As set forth above, a copy of information on the PAC II zone of the INFO 2 zone, may be recorded on an area of the PAC I zone of the INFO 1 zone corresponding to an area of the PAC II zone of the INFO 2 zone. If the PAC #1 zone of the PAC II zone is defective, the PAC #1 zone of the PAC I zone may be used (if not defective).

It is also possible that the DDS is made to include, not only the information on the 4 bytes of PAC II zone, but also information on the PAC I zone by allocating additional (for example, 4) bytes to the DDS. In this case, the information written on the PAC I will be free from the defective area of the PAC II zone.

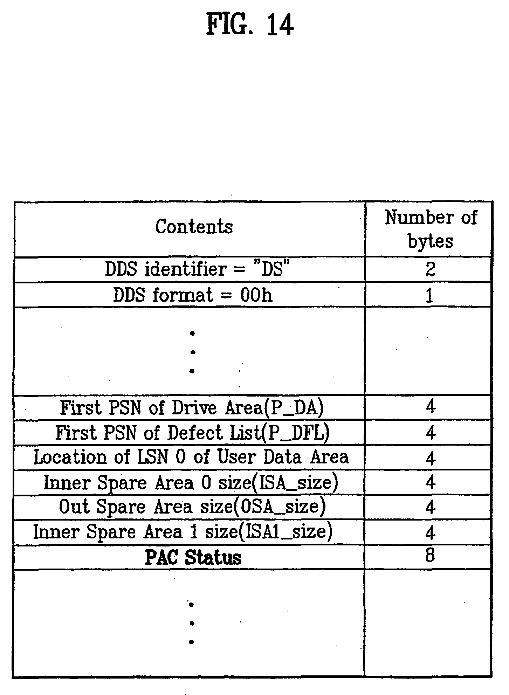

FIG 14 illustrates a diagram showing another embodiment of a DDS on a high density optical disc in accordance with another example embodiment of the present invention.

Referring to FIG 14, as described above, the DDS may include a "DDS identifier" field, a "DDS format" field, a "First PSN of Drive Area (P_DA)" field, a "First PSN of Defect List (P_DFL)" field, a "Location of LSN 0 of User Data Area" field, an "Inner Spare Area 0 size (ISA0_size)" field, an "Outer Spare Area size (OSA_size)" field, and an "Inner Spare Area 1 size (ISA1_size)" field, and/or a "PAC Status" field representing a status of the PAC zone.

The "PAC Status" field may have 8 bytes, for representing status of the PACs in the PAC II zone of the INFO 2 zone and the PAC I zone of the INFO 1 zone, which will be described in detail below.

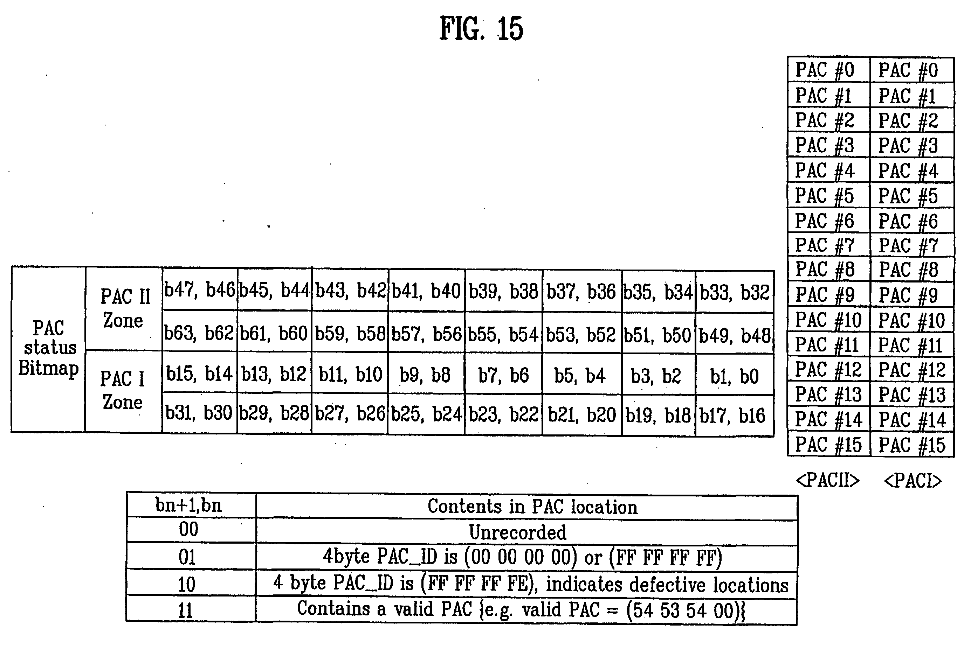

FIG 15 illustrates a diagram showing another embodiment of a DDS representing a PAC status on a high density optical disc in accordance with another example embodiment of the present invention.

Referring to FIG 15, the "PAC Status" field of the DDS may use 64 bits (8 bytes) in total for representing status of PACs in PAC II zone of the INFO 2 zone and PAC I zone of the INFO 1 zone.

In this example, information in one PAC may be represented with two bits, for example, by allocating bits b1 and b0 to indicate a status of the PAC #0 of the PAC I zone, and bits b2 and b3 to indicate a status of the PAC #1 of the PAC I zone, and every subsequent two bits indicating a PAC status of the PAC zone in succession. Accordingly, bits b31 and b30 may represent the PAC #15 status of the PAC I zone, bits b33 and b32 may indicate the PAC #0 status of the PAC 2 zone, and bits b63 and b62 may indicate the PAC #15 status of the PAC 2 zone.

The PAC status of the PAC zone represented with two bits may indicate that the PAC is unrecorded when the two bits are 00, the PAC is written in 00 00 00 00 bits to indicate that the PAC is writable or in FF FF FF FF bits to indicate that the PAC is re-usable even if the PAC has been used before when the two bits are 01, the PAC is a defective area FF FF FF FE when the two bits are 10, and the PAC is a valid PAC (for example, Valid PAC = 54 53 54 00) when the two bits are 11.

Therefore, the next writable PAC zone is an area with bits 00 or bits 01, and a position of the valid PAC will be an area with bits 11.

By using the above method, the optical disc drive may obtain information on a position of the valid PAC, a position of a defective area, a next writable position, and/or other relevant information on the PACs written in the PAC 2 zone and the PAC 1 zone from the 8 bytes of "PAC Status" field inserted in the DDS zone.

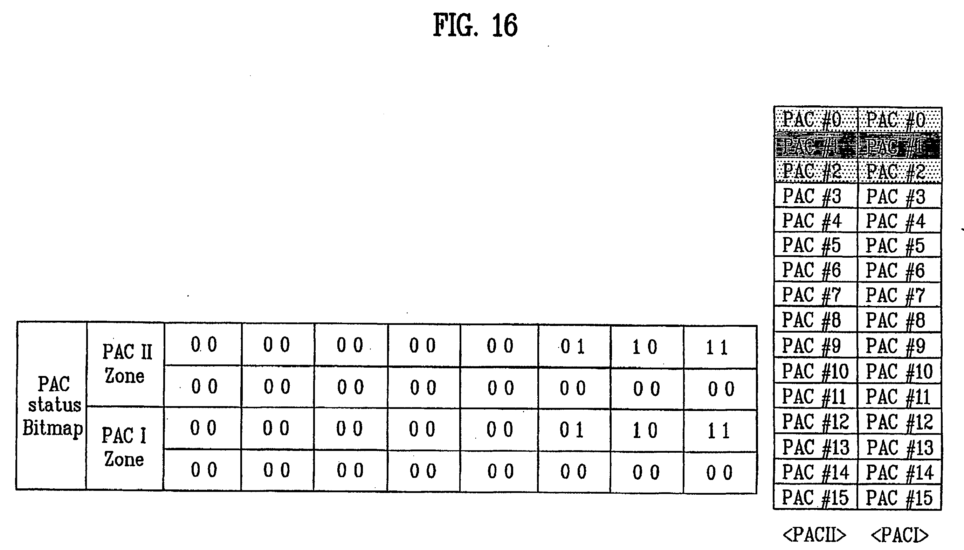

FIG. 16 illustrates a DDS representing a PAC status on a high density optical disc in accordance with another example embodiment of the present invention.

If a bitmap of the "PAC Status" field of the DDS is the same as illustrated in FIG 16, since the b33 and b32 bits indicating the PAC #0 in the PAC II zone is 11, it is known that the PAC #0 in the PAC II zone is a valid PAC.

Also, since the b35 and b34 bits indicating the PAC #1 in the PAC II zone are 10, it is known that the PAC #1 in the PAC II zone is a defective area, and since the b37 and b36 bits indicating the PAC #2 in the PAC II zone are 01, it is known that the PAC #2 in the PAC II zone is an area used previously, or if 00, usable presently.

Accordingly, if it is intended to find the position of the valid PAC, the optical disc drive may find the PAC with the bits 11 of the "PAC Status" field information of the DDS indicates, and when it is intended to find the position of a next writable PAC zone, the optical disc drive may find bits 01 or 00 in the "PAC Status" information.

Moreover, a back up of the PAC information in the PACII zone may be written on the PACI zone, even though the bitmap indicating the PACII zone of the "PAC Status" field and the bitmap indicating the PACI zone are identical, if positions of the defective areas and/or other similar areas are not identical, the two bitmaps may not be identical. Therefore, if it is intended to read information written on the PACI zone due to an unavoidable situation, it may be necessary to refer to information indicating the PACI zone from the "PAC Status" field information of the DDS.

Other than the example method for representing the PAC status of the PACII zone and the PACI zone with 8 bytes in the DDS, there are also other example methods for representing only the PAC status of the PACII zone with only four bytes. This is, as described above, because information written on the PACII zone and the information written on the PACI zone is identical, and, in this instance, if it is desired to know the PAC status of the PACI zone, the PACI zone can be determined from a position of the PACII zone corresponding to the PACI zone.

In this example, if writing of the PAC information on the PACI zone corresponding to a position of the PACII zone fails due to defective area or other similar circumstance in the PACII or PACI zone, a method of not using the area may be employed.

Information representing positions of a plurality of valid PACs with the DDS like the example embodiments of the present invention may be favorable for a writable disc BD-RE, or R in which information is updated by successive writing.

For example, in the case of a write once high density optical disc BD-R, in which positions of the plurality of valid PACs are changed whenever writing is repeated after ejection due to the physical characteristics of the write once disk, the position information may be written on a Temporary Disc Management Area (TDMA) as a Temporary Disc Definition Structure (TDDS) information and written as DDS information at the time of completion of disc writing or disc closing, when no more writing is desired by the user.

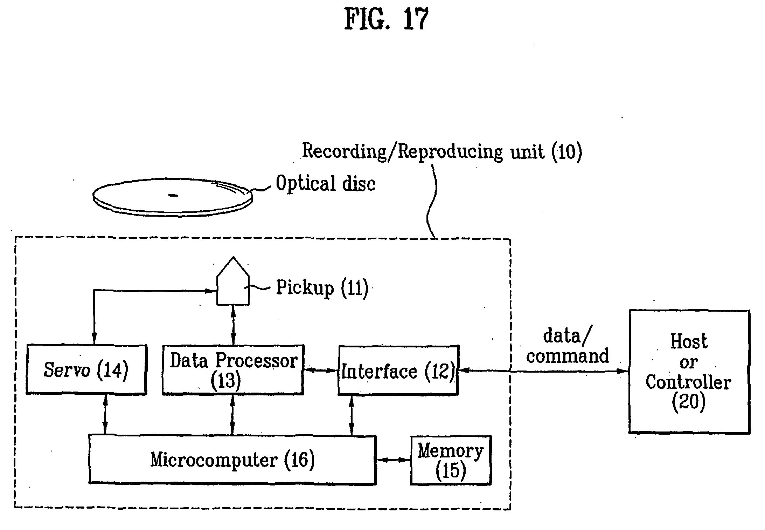

FIG 17 illustrates a block diagram of an optical recording/reproducing apparatus in accordance with an example embodiment of the present invention.

Referring to FIG 17, the optical recording/reproducing apparatus may include a recording/reproducing device 10 for performing recording to and/or reproduction from the optical disc, and a host, or controller 20 for controlling the recording/reproducing device 10. In an example embodiment, the recording/reproducing device 10 may act as the "optical disc drive" discussed above in conjunction with many example embodiments of the present invention.

In an example embodiment, the host 20 gives a writing or reproduction instruction to write to or reproduce from a particular area of the optical disc to the recording/reproducing device 10, and the recording/reproducing device 10 performs the recording/reproduction to/from the particular area in response to the instruction from the host 20.

The recording/reproducing device 10 may further include an interface part 12 for performing communication, such as exchange of data and instructions with the host 20, a pickup part 11 for writing/reading a data to/from the optical disc directly, a data processor 13 for receiving a signal from the pickup part 11 and recovering a desired signal value or modulating a signal to be written into a signal able to be written on the optical disc, a servo part 14 for controlling the pickup part 11 to read a signal from the optical disc accurately or to write a signal on the optical disc accurately, a memory 15 for temporary storage of various kinds of information including management information and data, and a microcomputer 16 for controlling various parts of the recording/reproducing device 10.

An example method for recording a PAC on a high density writable optical disc using the example optical recording/reproducing apparatus will be described below.

Upon inserting the optical disc into the optical recording/reproducing apparatus, management information may be read from the optical disc and stored in the memory 15 of the recording/reproducing device 10, for use at the time of recording/reproduction of the optical disc.

In this state, if the user desires to write on a particular area of the optical disc, the host 20, taking this as a writing instruction, provides information on a desired writing position to the recording/reproducing device 10, together with a data to be written.

The microcomputer 16 in the recording/reproducing device 10 may receive the writing instruction, determine if the area of the optical disc the host 20 desires to write is a defective area or not from the management information stored in the memory 15, and/or perform data writing according to the writing instruction from the host 20 on an area which is not a defective area.

If it is determined that writing on an entire disc or on a particular area of the disc includes new features which a previous version of the recording/reproducing device is not provided with, leading the previous version of the recording/reproducing device to fail to sense, or if it is intended to restrict functions, such as writing or reproducing to/from a particular area of the disc according to restriction set by the user, the microcomputer 16 of the recording/reproducing device 10 may write control information of the area in the PAC zone on the disc as an "Unknown PAC rule". The microcomputer 16 of the recording/reproducing device 10 may also write PAC information, such as the PAC_ID for a written state, and segment information which is control information on the particular area of the disc.

The PAC information may be written as a plurality of valid PACs on the PAC 2 zone of the INFO 2 zone at one cluster size and the plurality of valid PACs may be written on the PAC1 zone of the INFO 1 zone as a backup. In this example, position information of the plurality of valid PACs may be written on the DDS in the DMA of the optical disc by a method in accordance with example embodiments of the present invention.

In particular, the microcomputer 16 may provide position information on the area the data is written thereon or the PAC zone, and the data to the servo 14 and the data processor 13, so that the writing is finished at a desired position on the optical disc via the pickup part 11.

Additionally, a method for recording/reproducing the high density optical disc having PAC information written by the above example method will be described below.

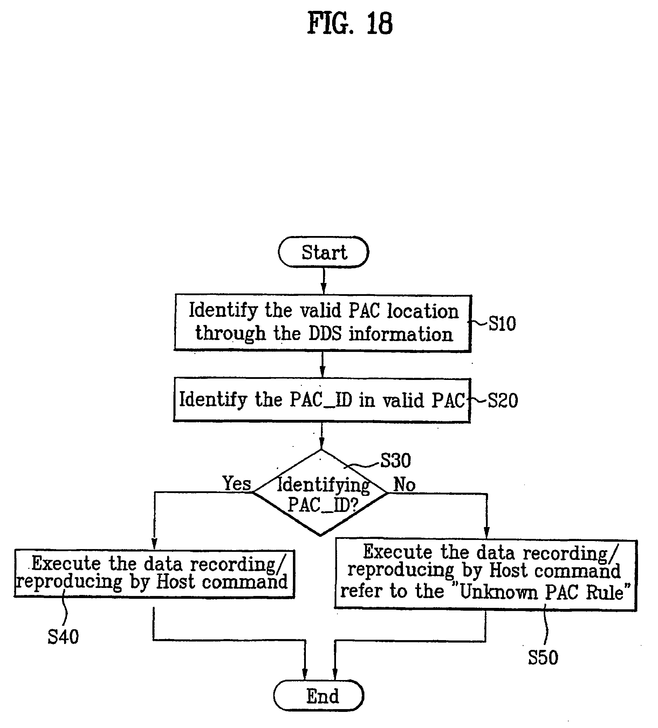

FIG. 18 illustrates a flowchart showing a method for recording /reproducing a high density optical disc having PAC recorded thereon in accordance with an example embodiment of the present invention.

Upon inserting an optical disc into the optical recording/reproducing apparatus, management information may be read from the optical disc and stored in the memory 15 of the recording and reproducing device 10, for use at the time of recording and reproduction of the optical disc.

The information in the memory 10 may include position information of various zones in the PAC zone on the disc. Particularly, positions of valid PACs in the PAC zone can be determined from the DDS information (S10).

After positions of the valid PACs are determined, a PAC_ID field of the PAC may be examined, to verify if the PAC_ID is an identified PAC_ID (S20 and S30).

If the written PAC_ID is identified, the method may determine that the recording and reproducing device having written the data on the disc is identical in version to a version of the present recording and reproducing device or determine there is no separate writing/reproduction restrictions, and the recording/reproduction may be executed according to the instruction from the host 20 (S40).

If identifying a code written on the PAC_ID fails, the method may then determine if there are restrictions, such as the recording and reproducing device having written the data on the disc has a version different from a version of the present recording and reproducing device, the recording/reproduction may be executed according to the instruction from the host with reference to recording/reproduction restriction areas on the disc written on the "Unknown PAC rule" (S50).

For this, the microcomputer 16 may provide the position information and data according to the instruction of the host to the servo 14 and the data-processor 13, so that the recording/reproduction is finished at a desired position on the optical disc via the pickup part 11.

As has been described, the apparatus and method for recording/reproduction to/from a high density optical disc of the present invention may have one or more of the following advantages.

First, the definition of an accessible area of a disc of a different version drive by using PACs may permit more robust protection of a data area having user data recorded thereon, for example, to prevent or reduce unauthorized access (for example, hacking).

Second, a plurality of valid PACs on the disc and/or pointers indicating positions of the PACs may permit more effective management of the PACs on the high density optical disc.

Third, apparatus and method for recording/reproducing data using PACs may permit more effective data recording/reproduction on a high density optical disc.

### Industrial Applicability

It will be apparent to those skilled in the art that various modifications and variations can be made to the example embodiments of the present invention described above without departing from the scope of the invention. Thus, it is intended that the present invention covers the modifications and variations of this invention provided they come within the scope of the appended claims and their equivalents.

## Claims

1. A recording medium, comprising:
a physical access control (PAC) zone storing a plurality of PAC data in units of cluster, the PAC data controlling an access of a drive to the recording medium, the PAC data including an identification code of the PAC data, a rule for designating applicable operations of a drive that cannot recognize the identification code of the PAC data when the drive attempts to access to the recording medium, and segment information for indicating the number of segment areas within a data area to which the PAC data applies, each of the PAC data having a data structure to control writing to and/or reading from the recording medium;
a backup PAC zone storing a copy of the PAC data; and
a management area storing status information indicating whether each cluster in the PAC zone and backup PAC zone is defective or not, the management area being separated from the PAC zone.

2. The recording medium of claim 1, wherein the status information is represented with two bits for one cluster.

3. The recording medium of claim 2, wherein the two bits 00 indicates that the PAC data is not recorded, the two bits 10 indicate that the cluster is invalid, and the two bits 11 indicate that the cluster is valid.

4. The recording medium of claim 1, wherein said management area is physically apart from the PAC zone.

5. The recording medium of claim 4, wherein said management area is located in a Disc Definition Structure (DDS) of a Defect Management Area (DMA).

6. The recording medium of claim 4, wherein said management area is located in Temporary Disc Definition Structure (TDDS) of Temporary Disc Definition Structure (TDMA).

7. The recording medium of claim 1, wherein the status information is written as pointers, then can be obtained without needing to scan all the clusters.

8. The recording medium of claim 1, wherein each of the PAC data includes a header that is common to the at least one PAC data, and
a specific information area including information specific to the PAC data.

9. The recording medium of claim 8, wherein the specific information area includes rules for enabling desired applications or functions.

10. A method of recording on a recording medium, comprising:
recording PAC data in a PAC zone and a copy of the PAC data in a backup PAC zone, said PAC zone storing a plurality of PAC data in units of cluster, each of the PAC data having a data structure to control writing to and/or reading from the recording medium, the PAC data controlling an access of a drive to the recording medium, the PAC data including an identification code of the PAC data, a rule for designating applicable operations of a drive that cannot recognize the identification code of the PAC data when the drive attempts to access the recording medium, and segment information for indicating the number of segment areas within a data area to which the PAC data applies; and
recording status information for indicating whether each cluster in the PAC zone and backup PAC zone is defective or not, the management area being separated from the PAC zone.

11. The method of claim 10, wherein the status information is represented with two bits for one cluster.

12. The method of claim 11, wherein the two bits 00 or 01 indicate a usable cluster.

13. The method of claim 10, wherein the status information is written as pointers, then can be obtained without needing to scan all the clusters.

14. A method of reproducing from a recording medium, comprising:
reading status information for a plurality of PAC data from a management area of the recording medium, the plurality of PAC data being stored in at least one PAC zone of the recording medium in units of cluster, each of the PAC data having a data structure to control writing to and/or reading from the recording medium, the status information indicating whether each cluster in the PAC zone and a backup PAC zone is defective or not, the management area being separated from the PAC zone;
reproducing at least one of the PAC data from the PAC zone and a copy of the PAC data from the backup PAC zone based on the status information, the PAC data controlling an access of a drive to the recording medium, the PAC data including an identification code of the PAC data, a rule for designating applicable operations of a drive that cannot recognize the identification code of the PAC data when the drive attempts to access the recording medium, and segment information for indicating the number of segment areas within a data area to which the PAC data applies.

15. The method of claim 14, wherein the status information is represented with two bits for one cluster.

16. The method of claim 15, wherein the two bits 00 or 01 indicates a usable cluster.

17. The method of claim 14, wherein the status information is written as pointers, then can be obtained without needing to scan all the clusters.

18. An apparatus for recording to and/or reproducing from a recording medium, comprising:
an pickup (11) to record data on the recording medium and/or reproduce data from the recording medium; and
a control unit (16) configured to control the pickup (11) to record PAC data in a PAC zone and a copy of the PAC data in a backup PAC zone, the PAC data being recorded in the PAC zone in units of cluster, each of the PAC data having a data structure to control writing to and/or reading from the recording medium, the PAC data controlling an access of a drive to the recording medium, the PAC data including an identification code of the PAC data, a rule for designating applicable operations of a drive that cannot recognize the identification code of the PAC data when the drive attempts to access the recording medium, and segment information for indicating the number of segment areas within a data area to which the PAC data applies, and the control unit (16) configured to control the pickup (11) to record status information for indicating whether each cluster in the PAC zone and backup PAC zone is defective or not, the management area being separated from the PAC zone.

19. The apparatus of claim 18, wherein the status information is represented with two bits for one cluster.

20. The apparatus of claim 19, wherein the two bits 00 or 01 indicates a usable cluster.

21. The apparatus of claim 20, wherein the status information is written as pointers, then can be obtained without needing to scan all the clusters.

22. The apparatus of claim 18, the apparatus further comprises a host device (20) configured to transmit command of writing and/or reading to the control unit.

## Patentansprüche

1. Aufzeichnungsmedium, mit:
einer physikalischen Zugriffssteuerungs- (PAC) Zone, die mehrere PAC-Daten in Clustereinheiten speichert, wobei die PAC-Daten einen Zugriff eines Laufwerks auf das Aufzeichnungsmedium steuern, wobei die PAC-Daten einen Identifikationscode der PAC-Daten, eine Regel zum Festlegen anwendbarer Operationen eines Laufwerks, das den Identifikationscode der PAC-Daten nicht erkennen kann, wenn das Laufwerk versucht, auf das Aufzeichnungsmedium zuzugreifen, und Segmentinformationen zum Anzeigen der Anzahl von Segmentbereichen innerhalb eines Datenbereichs aufweisen, für den die PAC-Daten gelten, wobei alle PAC-Daten eine Datenstruktur aufweisen, um das Schreiben auf und/oder das Lesen vom Aufzeichnungsmedium zu steuern;
einer Backup-PAC-Zone, die eine Kopie der PAC-Daten speichert; und
einem Verwaltungsbereich, der Statusinformationen speichert, die anzeigen, ob jeder Cluster in der PAC-Zone und der Backup-PAC-Zone fehlerhaft ist oder nicht, wobei der Verwaltungsbereich von der PAC-Zone getrennt ist.

2. Aufzeichnungsmedium nach Anspruch 1, wobei die Statusinformationen mit zwei Bits für einen Cluster dargestellt werden.

3. Aufzeichnungsmedium nach Anspruch 2, wobei die beiden Bits 00 anzeigen, dass die PAC-Daten nicht aufgezeichnet sind, die beiden Bits 10 anzeigen, dass der Cluster ungültig ist, und die beiden Bits 11 anzeigen, dass der Cluster gültig ist.

4. Aufzeichnungsmedium nach Anspruch 1, wobei der Verwaltungsbereich von der PAC-Zone physikalisch getrennt ist.

5. Aufzeichnungsmedium nach Anspruch 4, wobei sich der Verwaltungsbereich in einer Diskdefinitionsstruktur (DDS) eines Defektverwaltungsbereichs (DMA) befindet.

6. Aufzeichnungsmedium nach Anspruch 4, wobei sich der Verwaltungsbereich in einer vorübergehenden Diskdefinitionsstruktur (TDDS) eines vorübergehenden Defektverwaltungsbereichs (TDMA) befindet.

7. Aufzeichnungsmedium nach Anspruch 1, wobei die Statusinformationen als Zeiger geschrieben werden, die dann erhalten werden können, ohne alle Cluster scannen zu müssen.

8. Aufzeichnungsmedium nach Anspruch 1, wobei alle PAC-Daten aufweisen:
einen Dateikopf, der dem mindestens einen PAC-Datenwert gemeinsam ist, und
einen spezifischen Informationsbereich, der Informationen aufweist, die für die PAC-Daten spezifisch sind.

9. Aufzeichnungsmedium nach Anspruch 8, wobei der spezifische Informationsbereich Regeln zum Freigeben erwünschter Anwendungen oder Funktionen aufweist.

10. Verfahren zum Aufzeichnen auf einem Aufzeichnungsmedium, mit den Schritten:
Aufzeichnen von PAC-Daten in einer PAC-Zone und einer Kopie der PAC-Daten in einer Backup-PAC-Zone, wobei die PAC-Zone mehrere PAC-Daten in Clustereinheiten speichert, wobei alle PAC-Daten eine Datenstruktur aufweisen, um das Schreiben auf und/oder das Lesen vom Aufzeichnungsmedium zu steuern, wobei die PAC-Daten einen Zugriff eines Laufwerks auf das Aufzeichnungsmedium steuern, wobei die PAC-Daten einen Identifikationscode der PAC-Daten, eine Regel zum Festlegen anwendbarer Operationen eines Laufwerks, das den Identifikationscode der PAC-Daten nicht erkennen kann, wenn das Laufwerk versucht, auf das Aufzeichnungsmedium zuzugreifen, und Segmentinformationen zum Anzeigen der Anzahl von Segmentbereichen innerhalb eines Datenbereichs aufweisen, für den die PAC-Daten gelten; und
Aufzeichnen von Statusinformationen zum Anzeigen, ob jeder Cluster in der PAC-Zone und der Backup-PAC-Zone fehlerhaft ist oder nicht, wobei der Verwaltungsbereich von der PAC-Zone getrennt ist.

11. Verfahren nach Anspruch 10, wobei die Statusinformationen mit zwei Bits für einen Cluster dargestellt werden.

12. Verfahren nach Anspruch 11, wobei die beiden Bits 00 oder 01 einen verwendbaren Cluster anzeigen.

13. Verfahren nach Anspruch 10, wobei die Statusinformationen als Zeiger geschrieben werden, die dann erhalten werden können, ohne alle Cluster scannen zu müssen.

14. Verfahren zum Wiedergeben von einem Aufzeichnungsmedium, mit den Schritten:
Lesen von Statusinformationen für mehrere PAC-Daten von einem Verwaltungsbereich des Aufzeichnungsmediums, wobei die mehreren PAC-Daten in mindestens einer PAC-Zone des Aufzeichnungsmediums in Clustereinheiten gespeichert sind, wobei alle PAC-Daten eine Datenstruktur aufweisen, um das Schreiben auf und/oder das Lesen vom Aufzeichnungsmedium zu steuern, wobei die Statusinformationen anzeigen, ob jeder Cluster in der PAC-Zone und der Backup-PAC-Zone fehlerhaft ist oder nicht, wobei der Verwaltungsbereich von der PAC-Zone getrennt ist;
Wiedergeben mindestens eines PAC-Datenwerts aus der PAC-Zone und einer Kopie der PAC-Daten aus der Backup-PAC-Zone beruhend auf den Statusinformationen, wobei die PAC-Daten einen Zugriff eines Laufwerks auf das Aufzeichnungsmedium steuern, wobei die PAC-Daten einen Identifikationscode der PAC-Daten, eine Regel zum Festlegen anwendbarer Operationen eines Laufwerks, das den Identifikationscode der PAC-Daten nicht erkennen kann, wenn das Laufwerk versucht, auf das Aufzeichnungsmedium zuzugreifen, und Segmentinformationen zum Anzeigen der Anzahl von Segmentbereichen innerhalb eines Datenbereichs aufweisen, für den die PAC-Daten gelten.

15. Verfahren nach Anspruch 14, wobei die Statusinformationen mit zwei Bits für einen Cluster dargestellt werden.

16. Verfahren nach Anspruch 15, wobei die beiden Bits 00 oder 01 einen verwendbaren Cluster anzeigen.

17. Verfahren nach Anspruch 14, wobei die Statusinformationen als Zeiger geschrieben werden, die dann erhalten werden können, ohne alle Cluster scannen zu müssen.

18. Vorrichtung zur Aufzeichnung auf und/oder zur Wiedergabe von einem Aufzeichnungsmedium, mit:
einem Aufnehmer (11), um Daten auf das Aufzeichnungsmedium aufzuzeichnen und/oder Daten vom Aufzeichnungsmedium wiederzugeben; und
eine Steuereinheit (16), die konfiguriert ist, den Aufnehmer (11) so zu steuern, dass er PAC-Daten in einer PAC-Zone und eine Kopie der PAC-Daten in einer Backup-PAC-Zone aufzeichnet, wobei die PAC-Daten in der PAC-Zone in Clustereinheiten aufgezeichnet werden, wobei alle PAC-Daten eine Datenstruktur aufweisen, um das Schreiben auf und/oder das Lesen vom Aufzeichnungsmedium zu steuern, wobei die PAC-Daten einen Zugriff eines Laufwerks auf das Aufzeichnungsmedium steuern, wobei die PAC-Daten einen Identifikationscode der PAC-Daten, eine Regel zum Festlegen anwendbarer Operationen eines Laufwerks, das den Identifikationscode der PAC-Daten nicht erkennen kann, wenn das Laufwerk versucht, auf das Aufzeichnungsmedium zuzugreifen, und Segmentinformationen zum Anzeigen der Anzahl von Segmentbereichen innerhalb eines Datenbereichs aufweisen, für den die PAC-Daten gelten, und die Steuereinheit (16) konfiguriert ist, den Aufnehmer (11) so zu steuern, dass er Statusinformationen zum Anzeigen aufzeichnet, ob jeder Cluster in der PAC-Zone und der Backup-PAC-Zone fehlerhaft ist oder nicht, wobei der Verwaltungsbereich von der PAC-Zone getrennt ist.

19. Vorrichtung nach Anspruch 18, wobei die Statusinformationen mit zwei Bits für einen Cluster dargestellt werden.

20. Vorrichtung nach Anspruch 19, wobei die beiden Bits 00 oder 01 einen verwendbaren Cluster anzeigen.

21. Vorrichtung nach Anspruch 20, wobei die Statusinformationen als Zeiger geschrieben werden, die dann erhalten werden können, ohne alle Cluster zu scannen.

22. Vorrichtung nach Anspruch 18, wobei die Vorrichtung ferner eine Hostvorrichtung (20) aufweist, die konfiguriert ist, einen Befehl zum Schreiben und/oder Lesen an die Steuereinheit zu senden.

## Revendications

1. Support d'enregistrement, qui comprend :
une zone de contrôle d'accès physique (PAC) qui stocke une pluralité de données PAC en unités de cluster, lesdites données PAC contrôlant l'accès d'un lecteur audit support d'enregistrement, lesdites données PAC comprenant un code d'identification desdites données PAC, une règle de désignation des opérations applicables d'un lecteur qui ne peut reconnaître le code d'identification desdites données PAC lorsque ledit lecteur tente d'accéder audit support d'enregistrement, et des informations de segments destinées à indiquer le nombre de segments au sein d'une zone de données à laquelle s'appliquent lesdites données PAC, chacune desdites données PAC ayant une structure de données destinée à contrôler l'écriture et/ou la lecture depuis ledit support d'enregistrement ;
une zone PAC de sauvegarde qui stocke une copie desdites données PAC ; et
une zone de gestion qui stocke des informations d'état qui indiquent si chaque cluster de ladite zone PAC et de ladite zone PAC de sauvegarde est défectueux ou non, ladite zone de gestion étant séparée de ladite zone PAC.

2. Support d'enregistrement selon la revendication 1, dans lequel lesdites informations d'état sont représentées par deux bits par cluster.

3. Support d'enregistrement selon la revendication 2, dans lequel les deux bits 00 indiquent que lesdites données PAC ne sont pas enregistrées, les deux bits 10 indiquent que ledit cluster est invalide, et les deux bits 11 indiquent que le cluster est valide.

4. Support d'enregistrement selon la revendication 1, dans lequel ladite zone de gestion est physiquement distincte de ladite zone PAC.

5. Support d'enregistrement selon la revendication 4, dans lequel ladite zone de gestion est située dans une structure de définition de disque (DDS) d'une zone de gestion des erreurs (DMA).

6. Support d'enregistrement selon la revendication 4, dans lequel ladite zone de gestion est située dans une structure de définition de disque temporaire (TDDS) d'une structure de définition de disque temporaire (TDMA).

7. Support d'enregistrement selon la revendication 1, dans lequel lesdites informations d'état sont écrites sous la forme de pointeurs, puis peuvent être obtenues sans avoir besoin de scanner tous les clusters.

8. Support d'enregistrement selon la revendication 1, dans lequel chacune desdites données PAC comprend un en-tête qui est commun à chacune dudite au moins une donnée PAC, et
une zone d'informations spécifiques qui comprend des informations propres auxdites données PAC.

9. Support d'enregistrement selon la revendication 8, dans lequel ladite zone d'informations spécifiques comprend des règles destinées à permettre des applications ou des fonctions souhaitées.

10. Procédé d'enregistrement sur un support d'enregistrement, ledit procédé comprenant :
l'enregistrement des données PAC dans une zone PAC et d'une copie desdites données PAC dans une zone PAC de sauvegarde, ladite zone PAC stockant une pluralité de données PAC en unités de cluster, chacune desdites données PAC ayant une structure de données destinée à contrôler l'écriture et/ou la lecture depuis ledit support d'enregistrement, lesdites données PAC contrôlant l'accès d'un lecteur audit support d'enregistrement, lesdites données PAC comprenant un code d'identification desdites données PAC, une règle destinée à désigner les opérations applicables d'un lecteur qui ne peut reconnaître ledit code d'identification desdites données PAC lorsque ledit lecteur tente d'accéder audit support d'enregistrement, et des informations de segments destinées à indiquer le nombre de segments au sein d'une zone de données à laquelle s'appliquent lesdites données PAC ; et
l'enregistrement d'informations d'état destinées à indiquer si chaque cluster de ladite zone PAC et de ladite zone PAC de sauvegarde est défectueux ou non, ladite zone de gestion étant distincte de ladite zone PAC.

11. Procédé selon la revendication 10, dans lequel lesdites informations d'état sont représentées par deux bits par cluster.

12. Procédé selon la revendication 11, dans lequel les deux bits 00 ou 01 indiquent un cluster utilisable.

13. Procédé selon la revendication 10, dans lequel lesdites informations d'état sont écrites sous la forme de pointeurs, puis peuvent être obtenues sans avoir besoin de scanner tous les clusters.

14. Procédé de reproduction depuis un support d'enregistrement, qui comprend :
la lecture d'informations d'état pour une pluralité de données PAC depuis une zone de gestion dudit support d'enregistrement, ladite pluralité de données PAC étant stockée dans au moins une zone PAC dudit support d'enregistrement en unités de cluster, chacune desdites données PAC ayant une structure de données destinée à contrôler l'écriture et/ou la lecture depuis ledit support d'enregistrement, lesdites informations d'état indiquant si chaque cluster de ladite zone PAC et d'une zone PAC de sauvegarde est défectueux ou non, ladite zone de gestion étant distincte de ladite zone PAC ;
la reproduction d'au moins l'une desdites données PAC depuis ladite zone PAC et d'une copie desdites données PAC depuis ladite zone PAC de sauvegarde sur la base desdites informations d'état, lesdites données PAC contrôlant l'accès d'un lecteur audit support d'enregistrement, lesdites données PAC comprenant un code d'identification desdites données PAC, une règle destinée à désigner les opérations applicables d'un lecteur qui ne peut reconnaître le code d'identification desdites données PAC lorsque ledit lecteur tente d'accéder audit support d'enregistrement, et des informations de segments destinées à indiquer le nombre de segments au sein d'une zone de données à laquelle s'appliquent lesdites données PAC.

15. Procédé selon la revendication 14, dans lequel lesdites informations d'état sont représentées par deux bits par cluster.

16. Procédé selon la revendication 15, dans lequel les deux bits 00 ou 01 indiquent un cluster utilisable.

17. Procédé selon la revendication 14, dans lequel lesdites informations d'état sont écrites sous la forme de pointeurs, puis peuvent être obtenues sans avoir besoin de scanner tous les clusters.

18. Appareil d'enregistrement sur et/ou de reproduction depuis un support d'enregistrement, qui comprend :
une tête de lecture (11) destinée à enregistrer des données sur ledit support d'enregistrement et/ou à reproduire des données depuis ledit support d'enregistrement ; et
une unité de commande (16) configurée pour contrôler ladite tête de lecture (11) afin d'enregistrer lesdites données PAC dans une zone PAC et une copie desdites données PAC dans une zone PAC de sauvegarde, lesdites données PAC étant enregistrées dans ladite zone PAC en unités de cluster, chacun desdites données PAC ayant une structure de données destinée à contrôler l'écriture et/ou la lecture depuis ledit support d'enregistrement, lesdites données PAC contrôlant l'accès d'un lecteur audit support d'enregistrement, lesdites données PAC comprenant un code d'identification desdites données PAC, une règle destinée à désigner les opérations applicables d'un lecteur qui ne peut pas reconnaître le code d'identification desdites données PAC lorsque ledit lecteur tente d'accéder audit support d'enregistrement, et des informations de segments destinées à indiquer le nombre de segments d'une zone de données à laquelle s'appliquent lesdites données PAC, ladite unité de commande (16) étant configurée pour contrôler ladite tête de lecture (11) afin d'enregistrer des informations d'état destinées à indiquer si chaque cluster de ladite zone PAC et de ladite zone PAC de sauvegarde est défectueux ou non, ladite zone de gestion étant distincte de ladite zone PAC.

19. Appareil selon la revendication 18, dans lequel lesdites informations d'état sont représentées par deux bits par cluster.

20. Appareil selon la revendication 19, dans lequel les deux bits 00 ou 01 indiquent un cluster utilisable.

21. Appareil selon la revendication 20, dans lequel lesdites informations d'état sont écrites sous la forme de pointeurs, puis peuvent être obtenues sans avoir besoin de scanner tous les clusters.

22. Appareil selon la revendication 18, qui comprend un dispositif hôte (20) configuré pour transmettre une commande d'écriture et/ou de lecture à ladite unité de commande.
